# EUROPEAN PATENT APPLICATION

(11) **EP 4 851 377 A1**
(43) Date of publication of application: **09.12.2026**
(21) Application number: 25755198.6
(22) Date of filing: 14.02.2025
(51) Int. Cl.: E02F 9/20, E02F 9/24, E02F 9/26, G01S 17/86, G01S 17/93, G08B 3/10, G06T 7/277, G06V 20/52, G06V 10/75, H04N 7/18

(54) **SENSOR FUSION-BASED OBJECT DETECTION SYSTEM AND METHOD, AND CONSTRUCTION EQUIPMENT INCLUDING SAME SYSTEM**

(30) Priority: 15.02.2024 KR 20240022091
(71) Applicant: HD Construction Equipment Co., Ltd., Seongnam-si, Gyeonggi-do 13553 (KR)
(72) Inventor: KWON, Yongcheol, Siheung-si, Gyeonggi-do 15119 (KR); KIM, Yonghwi, Yongin-si, Gyeonggi-do 16828 (KR); CHO, Sungwon, Seongnam-si, Gyeonggi-do 13499 (KR); KIM, Youngbum, Hwaseong-si, Gyeonggi-do 18475 (KR)
(74) Representative: Isarpatent
(86) International application number: PCT/KR2025/099387
(87) International publication number: WO 2025/174201

(57) **Abstract**

A sensor fusion-based object detection system may include a sensor device comprising a first sensor configured to output an image, a second sensor configured to output a position and a speed of at least one object, and a third sensor configured to output equipment posture information of construction equipment, and a processing device configured to generate a driving control signal or a swing control signal of the construction equipment.

## Description

### [Technical Field]

Various embodiments of the present disclosure relate to a sensor fusion-based object detection system and method, and construction equipment comprising the same.

### [Background]

Recently, for the purpose of preventing collisions of construction equipment, various safety solutions for construction equipment have been released for medium and large-sized equipment such as wheel loaders and excavators.

Various construction equipment manufacturers are also developing or mass-producing collision avoidance functions, and mainly utilize a camera sensor or a radar sensor for object detection.

In order to effectively implement a collision avoidance safety solution for construction equipment, a function is required to minimize equipment control and prevent collisions based on accurate dangerous object information in a complex and frequently changing construction equipment environment. Otherwise, due to frequent false detections or excessive equipment control, the use of the equipment becomes inconvenient and work productivity may be significantly degraded.

The accurate dangerous object information must include a classification of a dangerous object that needs to avoid collision among various objects around the equipment, and accurate position information of the detected dangerous object.

The radar sensor is capable of knowing an accurate distance to a detected object, but object classification is impossible, and the camera sensor is capable of object classification, but there is a problem in that only an approximate distance of the detected object can be known.

### [DISCLOSURE]

### [Technical Problem]

Embodiments of the present disclosure provide a sensor fusion-based object detection system and method, and construction equipment comprising the same, which estimate relatively robust and accurate position information even in various equipment postures through AI technology and sensor fusion of a camera sensor and a radar sensor, as well as detecting/classifying objects around the equipment, to implement a more effective collision avoidance safety solution for construction equipment.

### [Technical Solution]

According to an embodiment of the present disclosure, a sensor fusion-based object detection system comprises: a sensor device comprising a first sensor configured to output an image, a second sensor configured to output a position and a speed of at least one object, and a third sensor configured to output posture information of construction equipment; and a processing device configured to generate a driving control signal or a swing control signal of the construction equipment, wherein the processing device comprises: an object determination module configured to determine a dangerous object from the image and output pixel information of the dangerous object; a coordinate conversion module configured to convert the pixel information of the dangerous object into a position on a radar spatial coordinate system; a matching module configured to receive the position of the dangerous object on the radar spatial coordinate system, receive a position of the at least one object on the radar spatial coordinate system from the second sensor, and match the dangerous object with the at least one object; a filtering module configured to estimate precise distance information of the dangerous object based on a position and a speed of an object matched with the dangerous object among the at least one object; and a control signal generation module configured to generate the driving control signal or the swing control signal of the construction equipment based on the precise distance information of the dangerous object.

The first sensor may comprise a camera sensor, the second sensor may comprise a radar sensor, and the third sensor may comprise an Inertial Measurement Unit (IMU) sensor.

The posture information may comprise a roll value, a pitch value, and a yaw value representing a degree of tilt for each axis.

The object determination module comprises a deep learning-based model learned to identify a specific object comprising a pedestrian, with which the construction equipment must not collide, as the dangerous object, and the pixel information of the dangerous object may comprise a width, a height, and coordinates of a center point of the dangerous object on the image.

The coordinate conversion module may primarily calibrate the pixel information of the dangerous object based on the posture information of the construction equipment, and secondarily calibrate distortion of a camera sensor included in the pixel information of the dangerous object based on lens information of the camera sensor.

The matching module may match the dangerous object with the at least one object by using an object position output from the camera sensor, an object position output from the radar sensor, and a probability distribution of the object position.

The matching module calculates a distance between the dangerous object and each of the at least one object by using an equation: ${d}_{m} = \sqrt{{\left({x}_{camera , i}-{μ}_{radar , j}\right)}^{T} {{\sum }_{j}^{- 1} \left({x}_{camera , i}-{μ}_{radar , j}\right)}^{T}}$ (wherein, *x_{camera,i}* is a position vector of a dangerous object i, µ*_{radar,j}* is a position probability distribution mean vector of an object j output from the radar sensor, and ${Σ}_{j}^{- 1}$ is a covariance matrix of an object position output from the radar sensor), and matches the dangerous object with an object having a shortest distance among the at least one object.

The filtering module may be implemented by using a Kalman filter-based filtering algorithm.

According to an embodiment of the present disclosure, construction equipment comprises: a sensor device comprising a camera sensor configured to output an image, a radar sensor configured to output a position and a speed of at least one object, and an IMU sensor configured to output posture information of construction equipment; and a processor configured to generate a driving control signal or a swing control signal of the construction equipment, wherein the processor is configured to determine a dangerous object from the image and acquire pixel information of the determined dangerous object, convert the pixel information of the dangerous object into a position on a radar spatial coordinate system, receive a position of the at least one object on the radar spatial coordinate system from the radar sensor, match the dangerous object with the at least one object, estimate precise distance information of the dangerous object based on a position and a speed of an object matched with the dangerous object among the at least one object, and generate the driving control signal or the swing control signal of the construction equipment based on the precise distance information of the dangerous object.

According to an embodiment of the present disclosure, a sensor fusion-based object detection method by construction equipment comprises: acquiring an image comprising an object by using a camera sensor; acquiring a position and a speed of at least one object by using a radar sensor; acquiring posture information of construction equipment by using an IMU sensor; determining a dangerous object from the image and acquiring pixel information of the determined dangerous object; converting the pixel information of the dangerous object into a position on a radar spatial coordinate system; matching the dangerous object with the at least one object; estimating precise distance information of the dangerous object based on a position and a speed of an object matched with the dangerous object among the at least one object; and generating a driving control signal or a swing control signal of the construction equipment based on the precise distance information of the dangerous object.

The determining of the dangerous object comprises determining the dangerous object by using a deep learning-based model learned to identify a specific object comprising a pedestrian, with which the construction equipment must not collide, as the dangerous object, and the pixel information of the dangerous object may comprise a width, a height, and coordinates of a center point of the dangerous object on the image.

The sensor fusion-based object detection method may further comprise primarily calibrating the pixel information of the dangerous object based on the posture information of the construction equipment, and secondarily calibrating distortion of a camera sensor included in the pixel information of the dangerous object based on lens information of the camera sensor.

The matching of the dangerous object with the at least one object may comprise matching the dangerous object with the at least one object by using an object position output from the radar sensor and a probability distribution of the object position.

The matching of the dangerous object with the at least one object by using the object position output from the radar sensor and the probability distribution of the object position may comprise: calculating a distance between the dangerous object and each of the at least one object by using an equation: (here, is a position vector of a dangerous object i, is a position probability distribution mean vector of an object j output from the radar sensor, and is a covariance matrix of an object position output from the radar sensor); and matching the dangerous object with an object having a shortest distance among the at least one object.

The estimating of the precise distance information of the dangerous object may comprise estimating the precise distance information of the dangerous object by using a Kalman filter-based filtering algorithm.

### [Advantageous Effects]

According to an embodiment of the present disclosure, by applying AI technology and sensor fusion technology, object information around equipment for precise control for collision avoidance can be estimated more accurately, even in a complex surrounding environment and when the equipment significantly shakes due to the nature of construction equipment operation.

### [Brief Description of the Drawings]

FIG. 1 is a view illustrating an autonomous work system according to various embodiments of the present disclosure.
FIG. 2 is a view for explaining an excavator according to various embodiments of the present disclosure.
FIG. 3 is a view illustrating a functional block diagram of construction equipment according to various embodiments of the present disclosure.
FIG. 4 is a view illustrating a functional block diagram of a sensor fusion-based object detection system of construction equipment according to various embodiments of the present disclosure.
FIG. 5 is a view for explaining an operation of an object determination module of FIG. 4.
FIG. 6 is a view for explaining an operation of a matching module of FIG. 4.
FIG. 7 is a flowchart illustrating a sensor fusion-based object detection method of construction equipment according to various embodiments of the present disclosure.

### [Description of Embodiments]

Advantages and features of the present disclosure, and apparatuses and methods for achieving them will be clarified with reference to embodiments described below in detail together with the accompanying drawings. However, the present disclosure is not limited to the embodiments disclosed below, but will be implemented in various different forms, and only the present embodiments make the disclosure of the present disclosure complete, and are provided to completely inform a person of ordinary skill in the art to which the present disclosure pertains of the scope of the disclosure, and the present disclosure is only defined by the scope of the claims. Like reference numerals refer to like elements throughout the specification.

When one element is referred to as being "connected to" or "coupled to" another element, it includes both a case of being directly connected or coupled to the other element or a case where another element is interposed therebetween. On the other hand, when one element is referred to as being "directly connected to" or "directly coupled to" another element, it indicates that no other element is interposed therebetween. "And/or" includes each and all combinations of one or more of the mentioned items.

Terms used in the present specification are for explaining the embodiments and are not intended to limit the present disclosure. In the present specification, a singular form also includes a plural form unless specifically stated otherwise in a phrase. "comprises" and/or "comprising" used in the specification do not exclude the presence or addition of one or more other elements, steps, operations, and/or devices mentioned elements, steps, operations, and/or devices.

Although a first, a second, etc. are used to describe various elements, it goes without saying that these elements are not limited by these terms. These terms are only used to distinguish one element from another element.

Therefore, it goes without saying that a first element mentioned below may be a second element within the technical spirit of the present disclosure. Unless otherwise defined, all terms (including technical and scientific terms) used in the present specification may be used with meanings commonly understandable to a person of ordinary skill in the art to which the present disclosure pertains. In addition, terms defined in a commonly used dictionary are not interpreted ideally or excessively unless explicitly and specifically defined.

The term 'portion' or 'module' used in the present embodiment means software or a hardware component such as an FPGA or an ASIC, and the 'portion' or 'module' performs certain roles. However, the 'portion' or 'module' is not limited to software or hardware. The 'portion' or 'module' may be configured to reside in an addressable storage medium and may be configured to reproduce one or more processors. Thus, as an example, the 'portion' or 'module' may include components such as software components, object-oriented software components, class components, and task components, processes, functions, attributes, procedures, subroutines, segments of program code, drivers, firmware, microcode, circuits, data, databases, data structures, tables, arrays, and variables. Functions provided within components and 'portion's or 'module's may be combined into a smaller number of components and 'portion's or 'module's or may be further separated into additional components and 'portion's or 'module's.

Steps of a method or algorithm described in connection with some embodiments of the present disclosure may be directly implemented as hardware executed by a processor, a software module, or a combination of the two. The software module may reside in a RAM memory, a flash memory, a ROM memory, an EPROM memory, an EEPROM memory, a register, a hard disk, a removable disk, a CD-ROM, or any other form of recording medium known in the art. An exemplary recording medium is coupled to a processor, and the processor can read information from the recording medium and write information to the storage medium. Alternatively, the recording medium may be integral with the processor. The processor and the recording medium may reside within an application specific integrated circuit (ASIC). The ASIC may reside within a user terminal.

Hereinafter, the present disclosure will be described in detail by explaining preferred embodiments of the present disclosure with reference to the accompanying drawings.

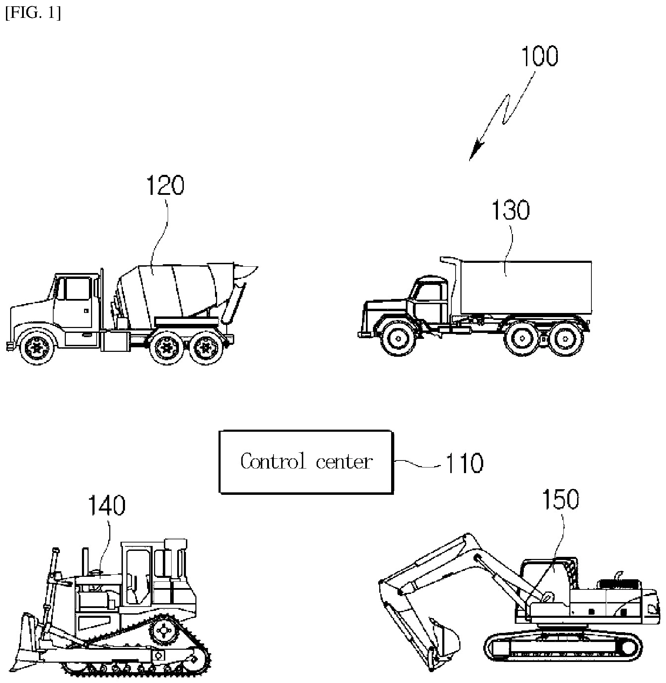

FIG. 1 is a view illustrating an autonomous work system 100 according to various embodiments of the present disclosure.

Referring to FIG. 1, the autonomous work system 100 according to various embodiments may include a control center 110 and at least one construction equipment (or autonomous operation construction equipment) 120 to 150.

According to various embodiments, the construction equipment 120 to 150 refers to machines that perform operations at civil engineering or building construction sites, and as illustrated in FIG. 1, may include a mixer truck 120, a dump truck 130, a dozer 140, and an excavator 150. However, this is merely exemplary, and the construction equipment may include various other machines such as a crane, a wheel loader, a scraper, and the like.

According to an embodiment, the construction equipment 120 to 150 may perform operations by an operator in accordance with an operation instruction received from the control center 110. According to another embodiment, the construction equipment 120 to 150 may perform operations autonomously without an operator. The operation instruction may include information related to an operation area where the corresponding construction equipment needs to operate, operations to be performed in the operation area, and the like. For example, the construction equipment 120 to 150 may move to the operation area to perform operations without user manipulation or based on user manipulation in accordance with the operation instruction.

The construction equipment 120 to 150 may be equipped with various sensors, and may detect a state of the construction equipment and/or a surrounding environment of the construction equipment based on information acquired through the sensors, and consider a detection result in performing operations.

In addition, the construction equipment 120 to 150 may be equipped with an instrument panel capable of displaying information on the construction equipment 120 to 150 or making control settings for the construction equipment 120 to 150. According to an embodiment, the instrument panel is equipped with a touch sensor capable of receiving a user's touch input, so as to acquire information regarding which image in the instrument panel has been touched and executed by the user. The construction equipment 120 to 150 may collect the user's instrument panel touch information and transmit the collected information to the control center 110.

According to various embodiments, the control center 110 may be a system that manages at least one construction equipment 120 to 150 deployed at an operation site. According to an embodiment, the control center 110 may direct operations to the at least one construction equipment 120 to 150. For example, the control center 110 may generate an operation instruction defining an operation area and operations to be performed in the corresponding operation area, and transmit the generated operation instruction to the at least one construction equipment 120 to 150.

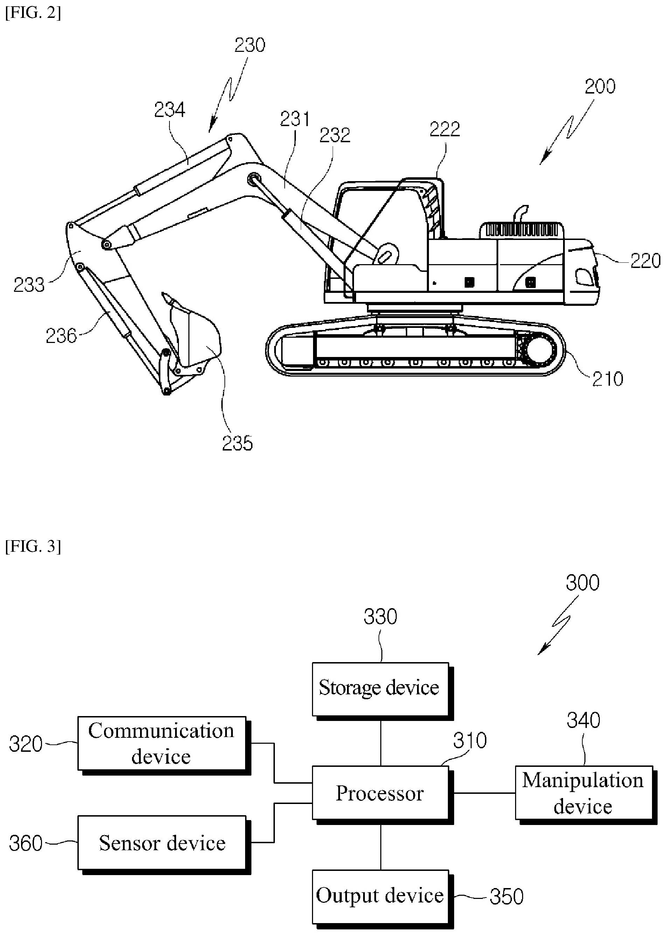

FIG. 2 is a view for explaining an excavator 200 according to various embodiments of the present disclosure. In the following description, an excavator will be described as an example among the construction equipment illustrated in FIG. 1, but the construction equipment is not limited to the excavator.

Referring to FIG. 2, the excavator 200 may include a lower structure 210 that performs a travel role, an upper structure 220 mounted on the lower structure 210 to rotate 360 degrees, and a front work device 230 coupled to a front of the upper structure 220. However, this is merely exemplary, and embodiments of the present disclosure are not limited thereto. For example, in addition to the components of the excavator 200 described above, one or more other components (e.g., a plate coupled to a rear of the lower structure 210, etc.) may be added.

According to various embodiments, the upper structure 220 may be equipped with a cabin 222 in which an operator can ride and operate, and may be provided with an internal space (not shown) in which a power generation device (e.g., an engine) can be mounted. The cabin 222 may be provided at a portion close to an operation area. The operation area is a space where the excavator 200 performs operations and is located in front of the excavator 200. For example, considering that the operator on board performs operations under a secured field of view and the position where the front work device 230 is mounted, the cabin 222 may be located at a position biased to one side in the upper structure 220 while being close to the operation area as shown in FIG. 2.

According to various embodiments, the front work device 230 may be mounted on an upper surface of the upper structure 220, and may be a device for conducting operations such as earth excavation or transportation of objects with heavy loads. According to an embodiment, the front work device 230 may include a boom 231 rotatably coupled to the upper structure 220, a boom cylinder 232 for rotating the boom 231, an arm 233 rotatably coupled to a tip of the boom 231, an arm cylinder 234 for rotating the arm 233, a bucket 235 rotatably coupled to a tip of the arm 233, and a bucket cylinder 236 for rotating the bucket 235. During operation of the excavator 200, one end of the boom 231, one end of the arm 233, and one end of the bucket 235 individually perform rotational movements, thereby maximizing an area that the bucket 235 can reach. The aforementioned front work device 230 is well known in many documents, and thus a detailed description thereof will be omitted.

According to various embodiments, the lower structure 210 may be coupled to a lower surface of the upper structure 220. The lower structure 210 may include a traveling body formed in a wheel type using wheels or a crawler type using continuous tracks. The traveling body may implement forward, backward, left, and right movements of the excavator 200 using power generated by the power generation device as driving force. According to an embodiment, the lower structure 210 and the upper structure 220 may be rotatably coupled by a center joint.

According to various embodiments, the excavator 200 may include a plurality of sensors for collecting information related to operations of the excavator and/or information related to the surrounding environment.

According to an embodiment, the plurality of sensors may include a first sensor for detecting operations of the excavator 200. For example, the operations of the excavator 200 may include a rotational operation of the upper structure 220 (or the lower structure 210). The first sensor may be disposed at the center joint to detect the rotational operation of the upper structure 220. In addition, the operations of the excavator 200 may include a rotational operation of the front work device 230. The first sensor may be disposed on each of the boom 231, the arm 233, and the bucket 235, or disposed at joint parts (e.g., hinge connection parts) of the boom 231, the arm 233, and the bucket 235 to detect rotational operations for at least each of the boom 231, the arm 233, and the bucket 235. The aforementioned position of the first sensor is merely an embodiment and the present disclosure is not limited thereto, and the first sensor may be disposed at various positions capable of detecting the state of the excavator 200.

According to an embodiment, the plurality of sensors may include a second sensor for detecting the operation area where the excavator 200 conducts operations. As described above, the operation area is a space where the excavator 200 performs operations, and may be located in front of the excavator 200. The second sensor may be disposed at a portion close to the operation area in the upper structure 220, for example, on one side close to the front work device 230 on an upper surface of the cabin 222, to detect the operation area. However, this is merely exemplary, and the position of the second sensor is not limited thereto. For example, the second sensor may additionally or optionally be disposed on the front work device 230, for example, the arm 233 or the bucket 235, so as to detect the operation area.

According to an embodiment, the plurality of sensors may include a third sensor for detecting obstacles around the excavator 200. The third sensor may be disposed at the front, sides, and rear of the upper structure 220 to detect obstacles around the excavator 200. The aforementioned position of the third sensor is merely an embodiment and the present disclosure is not limited thereto, and the third sensor may be disposed at various positions capable of detecting obstacles around the excavator 200.

According to various embodiments, the various sensors described above may include an angle sensor, an inertial sensor, a rotation sensor, an electromagnetic wave sensor, a camera sensor, radar, lidar, an ultrasonic sensor, or the like. For example, the first sensor may be configured with at least one of an angle sensor, an inertial sensor, or a rotation sensor, and the second sensor and the third sensor may be configured with at least one of an electromagnetic wave sensor, a camera sensor, radar, lidar, or an ultrasonic sensor. For example, camera sensors disposed on the upper surface of the cabin 222 and the arm 233 of the excavator 200 may be used as the second sensor. In addition, a lidar disposed on the front of the excavator 200, ultrasonic sensors disposed on the sides and rear of the excavator 200, or camera sensors disposed on the front, sides, and rear of the excavator 200 may be used as the third sensor. Additionally or optionally, when image sensors are used as the second sensor and the third sensor, they may be configured as a stereo vision system capable of acquiring images from which distance information of a target object can be known.

In addition, each of the first sensor, the second sensor, and the third sensor may perform operations identical or similar to those of other sensors. For example, the third sensor for detecting obstacles around the excavator 200 may be used to perform the operations of the second sensor for detecting the operation area where the excavator 200 conducts operations.

According to various embodiments, the excavator 200 is capable of unmanned automation, in other words, performing autonomous operations, and may include at least one positioning device or acquire positioning information from an external device.

According to an embodiment, the positioning device may use a GNSS (Global Navigation Satellite System) module capable of receiving satellite signals, and a RTK (Real Time Kinematic) GNSS module may also be used for precise measurement. For example, at least one positioning device may be disposed on the upper structure 220 of the excavator 200.

FIG. 3 is a view illustrating a functional block diagram of a construction equipment 300 according to various embodiments of the present disclosure. The construction equipment 300 described in the following drawings may be any one of the construction equipment 120 to 150 illustrated in FIG. 1.

Referring to FIG. 3, the construction equipment 300 may include a processor 310, a communication device 320, a storage device 330, a manipulation device 340, an output device 350, and a sensor device 360. However, this is merely exemplary, and embodiments of the present disclosure are not limited thereto. For example, at least one of the components of the construction equipment 300 described above may be omitted, or one or more other components may be added as components of the construction equipment 300.

According to various embodiments, the communication device 320 may transmit and receive data with a remote external device using wireless communication technology. The external device may include a control center 110, a remote control device, another display device (e.g., a smartphone, a laptop, a tablet, etc.), and/or other construction equipment. In this case, the communication technology used by the communication device 320 includes GSM (Global System for Mobile communication), CDMA (Code Division Multi Access), LTE (Long Term Evolution), 5G, WLAN (Wireless LAN), Wi-Fi (Wireless-Fidelity), Bluetooth, RFID (Radio Frequency Identification), Infrared Data Association (IrDA), ZigBee, NFC (Near Field Communication), and the like. In addition, the communication device 320 may include at least one positioning device.

According to various embodiments, the storage device 330 may store various data used by at least one component (e.g., the processor 310, the communication device 320, the manipulation device 340, the output device 350, or the sensor device 360) of the construction equipment 300. According to an embodiment, the storage device 330 may store specifications (e.g., model name, identification number, basic specifications) of the construction equipment 300, map data, and the like. According to an embodiment, the storage device 330 may store design drawings in accordance with which the construction equipment 300 is to operate. The design drawings may be directly stored in the storage device 330 by a user, or the construction equipment 300 may be connected to the control center 110 through the communication device 320 to acquire and store the design drawings in the storage device 330. The storage device 330 may include at least one of a non-volatile memory device and a volatile memory device.

According to various embodiments, the manipulation device 340 may receive commands or data to be used for controlling the operation of the construction equipment 300. The manipulation device 340 may include manipulation levers for manipulating at least a portion of the front work device 230 (e.g., the boom 231, the arm 233, and the bucket 235), a steering wheel for manipulating steering of the lower structure 210, a gear shift lever for manipulating moving speed or forward/reverse travel of the construction equipment 300, and the like. In addition, the manipulation device 340 may include an emergency stop switch. The emergency stop switch may be a hardware switch attached to a specific position of the construction equipment 300, or a wireless emergency stop receiving device operating in response to a wireless signal. In the case of the wireless emergency stop receiving device, the construction equipment 300 may be emergency-stopped by receiving a remotely manipulated emergency stop signal.

According to various embodiments, the output device 350 may generate an output associated with operations of the construction equipment 300. According to an embodiment, the output device 350 may include a display configured to output visual information, an audio data output device configured to output auditory information, a haptic module configured to output tactile information, and the like. For example, the display may include a liquid crystal display (LCD), a light emitting diode (LED) display, an organic light emitting diode (OLED) display, a micro-electromechanical systems (MEMS) display, electronic paper, or the like. In addition, the audio data output device may include at least one of a speaker, an earphone, an earset, or a headset included in the construction equipment 300 or connected to the construction equipment 300 through a wired/wireless connection.

According to various embodiments, as described above with reference to FIG. 2, the sensor device 360 may include a first sensor for detecting a state of the construction equipment 300, a second sensor for detecting an operation area where the construction equipment 300 conducts operations, and/or a third sensor for detecting obstacles around the construction equipment 300. According to an embodiment, the construction equipment 300 may include a posture recognition sensor for recognizing a posture of a vehicle body, and in addition, sensors required for operating the construction equipment 300 may be added.

According to various embodiments, the processor 310 may be configured to control overall operations of the construction equipment 300. According to an embodiment, the processor 310 may execute software (e.g., a program) stored in the storage device 330 to control at least one component (e.g., the communication device 320, the storage device 330, the manipulation device 340, the output device 350, or the sensor device 360) connected to the processor 310, and perform various data processing or operations. For example, as at least a part of the data processing or operations, the processor 310 may store commands or data received from other components in the storage device 330, process the commands or data stored in the storage device 330, and store result data in the storage device 330. The processor 310 may include a main processor and an auxiliary processor capable of operating independently of or together with the main processor. According to an embodiment, the processor 310 may perform CAN (Controller Area Network) communication with the aforementioned components (e.g., the communication device 320, the storage device 330, the manipulation device 340, the output device 350, or the sensor device 360), but the present disclosure is not limited thereto.

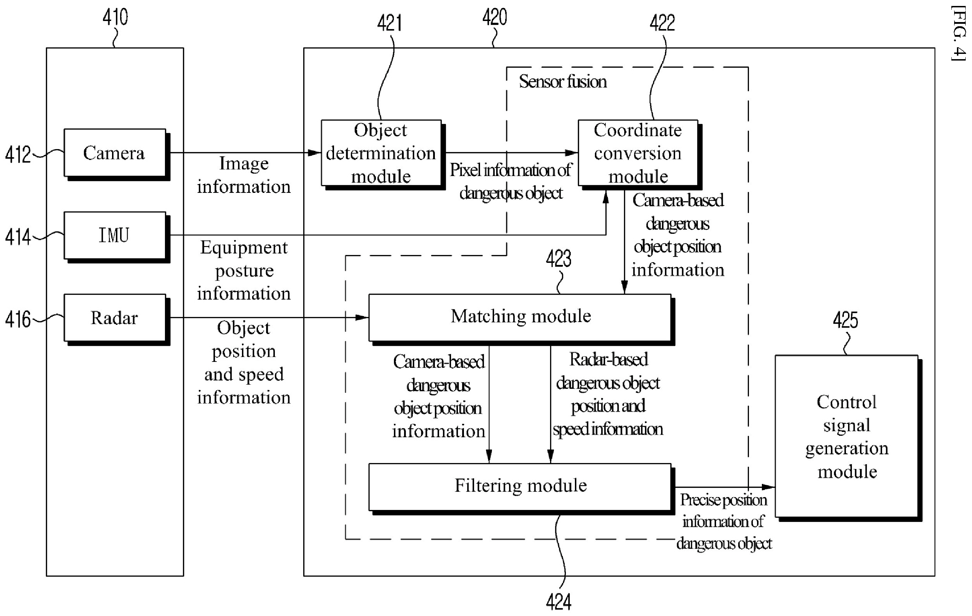

FIG. 4 is a view illustrating a functional block diagram of an object detection system based on sensor fusion for construction equipment according to various embodiments of the present disclosure.

Referring to FIG. 4, the object detection system 400 based on sensor fusion for construction equipment may be implemented in the construction equipment 300. Alternatively, the object detection system 400 based on sensor fusion for construction equipment may be implemented as a separate device.

The object detection system 400 based on sensor fusion for construction equipment may include a sensor device 410 for measuring equipment surrounding information and equipment information, and a processing device 420 for processing data acquired by the sensor device 410 to generate control signals.

Here, the processing device 420 may be implemented as separate hardware such as an ASIC, but may also be implemented as a software program. When implemented as a software program, it may be executed by a processor of the object detection system 400 based on sensor fusion for construction equipment, or may be executed by the processor 310 of the construction equipment of FIG. 3.

The sensor device 410 may acquire and provide information on objects surrounding the construction equipment and posture information of the construction equipment. To this end, the sensor device 410 may include a camera sensor 412 configured to capture and output images of objects surrounding the construction equipment, a radar sensor 416 configured to detect and output position and speed information of objects surrounding the construction equipment, and an IMU (Inertial Measurement Unit) sensor 414 configured to detect and output posture information of the construction equipment.

A plurality of camera sensors 412 may be mounted to enable monitoring of the entire surroundings of the construction equipment, and may capture images of objects surrounding the construction equipment to transmit or output the captured images to the processing device 420.

The IMU sensor 414 may detect roll/pitch/yaw values indicating a degree of tilt for each axis of the construction equipment to transmit or output the detected values to the processing device 420.

A plurality of radar sensors 416 may be mounted to enable monitoring of the entire surroundings of the construction equipment, and may detect objects and transmit or output position and speed information of objects surrounding the construction equipment to the processing device 420. The position of the object surrounding the construction equipment may be represented as a position on a radar spatial coordinate system.

The processing device 420 receives images of surrounding objects from the camera sensor 412, receives position and speed information of surrounding objects from the radar sensor 416, and receives posture information of the construction equipment from the IMU sensor 414.

The processing device 420 may include an object determination module 421, a coordinate conversion module 422, a matching module 423, a filtering module 424, and a control signal generation module 425.

The object determination module 421 may receive the images provided from the camera sensor 412. The object determination module 421 may determine a dangerous object from the images, and detect and output pixel information of the dangerous object on the images. The pixel information of the dangerous object may include a width, a height, and coordinates of a center point of the dangerous object on the images.

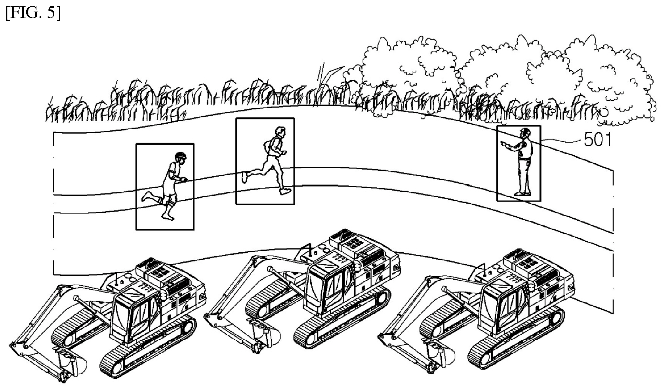

FIG. 5 is a view for explaining an operation of the object determination module of FIG. 4. As shown in a box 501 of FIG. 5, the object determination module 421 may recognize a pedestrian or the like around the construction equipment. The object determination module 421 may use a known technique to recognize a pedestrian or the like in an image. For example, the object determination module 421 may include a deep learning-based model learned to identify a specific object including a pedestrian, with whom the construction equipment must not collide, as a dangerous object, and may determine the object using the model.

The coordinate conversion module 422 may receive pixel information of the dangerous object on the image from the object determination module 421. The pixel information of the dangerous object may represent a feature point in the image.

In addition, the coordinate conversion module 422 may receive posture information of the construction equipment from the IMU sensor 414. Upon receiving the posture information of the construction equipment, the coordinate conversion module 422 may primarily calibrate the pixel information of the dangerous object based on a degree of tilt of the construction equipment according to the posture information of the construction equipment. In addition, the coordinate conversion module 422 may secondarily correct distortion of a camera sensor included in the pixel information of the dangerous object by using a distortion coefficient such as camera lens information, thereby converting the pixel information output as the feature point into coordinates of a radar spatial coordinate system.

Referring back to FIG. 4, the matching module 423 may receive position and speed information of objects surrounding the construction equipment from the radar sensor 416, and receive radar spatial coordinates of the dangerous object from the coordinate conversion module 422. The matching module 423 may match the radar spatial coordinates of the dangerous object with positions of the objects surrounding the construction equipment. Since the positions of the objects surrounding the construction equipment are acquired from the radar sensor 416, they may be represented as radar spatial coordinates without coordinate conversion. Therefore, the dangerous object acquired through the image of the camera sensor 412 and the surrounding objects acquired through the radar sensor 416 may be represented in the same radar spatial coordinates, and may be matched with each other when coordinate values are similar.

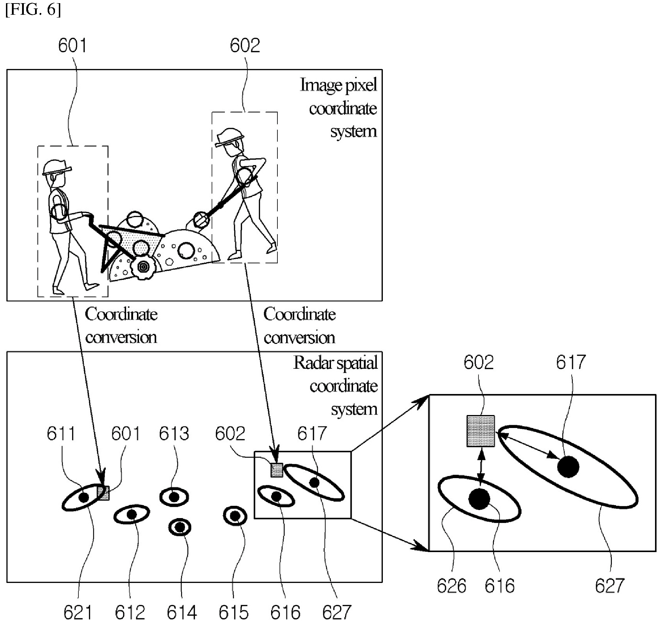

FIG. 6 is a view for explaining an operation of the matching module of FIG. 4. Referring to FIG. 6, an operation of filtering out only the objects classified as dangerous objects by the object determination module 421 from among objects detected by the radar sensor 416 may be required. To this end, the matching module 423 compares the pixel information of the dangerous object converted into the radar spatial coordinates with object information detected by the radar sensor 416, and may match the dangerous object classified by the object determination module 421 among the objects detected by the radar sensor 416 and the objects of the image of the camera sensor 412 through distance calculation on a probability distribution.

In FIG. 6, rectangular areas 601 and 602 represent position information of camera-based dangerous objects, and blue circles 611 to 617 represent position information of radar-based objects. In addition, blue ellipses 621, 626, and 627 represent position probability distributions of the radar-based objects.

Referring to FIG. 6, assuming that the object determination module 421 detects two people 601 and 602 as dangerous objects in the image from the camera sensor 412 and the radar sensor 416 detects a total of seven objects 611 to 617 including the two people, it is necessary to match the seven objects 611 to 617 detected by the radar sensor 416 with the two dangerous objects 601 and 602.

According to an embodiment, the matching module 423 may match the objects based on a simple distance. The matching module 423 may match a radar-detected object located closest to the dangerous object with the dangerous object. According to the simple distance-based matching in the example of FIG. 6, the matching module 423 may match the first person 601 with the leftmost radar-detected object 611, and match the second person 602 with the second radar-detected object 616 from the right.

According to another embodiment, the matching module 423 may use a probability distribution of radar for matching. Specifically, the matching module 423 may calculate a position probability distribution of the radar for the seven objects 611 to 617 detected by the radar sensor 416, and obtain a mean vector of the calculated position probability distribution of each object. Subsequently, the matching module 423 may substitute the mean vector of the position probability distribution of each object into a formula for calculating a distance on the position probability distribution below, thereby calculating a distance from the dangerous object as shown in Equation 1 below. [Mathematical Formula 1] ${d}_{m} = \sqrt{{\left({x}_{camera , i}-{μ}_{radar , j}\right)}^{T} {{\sum }_{j}^{- 1} \left({x}_{camera , i}-{μ}_{radar , j}\right)}^{T}}$

Here, *x_{camera,i}* represents a position vector of a camera-based dangerous object i, µ*_{radar,j}* represents a position probability distribution mean vector of an object j output from the radar sensor 416, and ${{Σ}_{j}}^{- 1}$ represents a covariance matrix of an object position output from the radar sensor 416.

In other words, the matching module 423 may calculate a distance between the dangerous object and each of the radar-detected objects using Equation 1, and match the dangerous object with a radar-detected object having the shortest distance among the radar-detected objects.

In the example of FIG. 6, when the probability distribution of the radar is utilized for matching, the matching module 423 may determine that the rightmost radar-detected object 617 is more likely to be the second person 602.

Referring back to FIG. 4, the filtering module 424 may estimate precise distance information of the dangerous object based on the position and speed of the matched dangerous object. To this end, the filtering module 424 may use a Kalman filter-based filtering algorithm. The filtering module 424 may receive camera-based dangerous object position information and radar-based dangerous object position and speed information matched through the matching module 423, and finally estimate the precise distance information of the dangerous object.

In this case, the filtering module 424 may estimate more precise distance information by using a detection period of each sensor and longitudinal/lateral measurement accuracy of each sensor.

The control signal generation module 425 may receive the precise distance information of the dangerous object from the filtering module 424, and generate a driving control signal or a swing control signal of the construction equipment based on the precise distance information of the dangerous object. When the control signal generation module 425 uses the estimated precise distance information of the dangerous object to generate equipment travel and swing control signals, it can be utilized for a more effective collision avoidance safety solution.

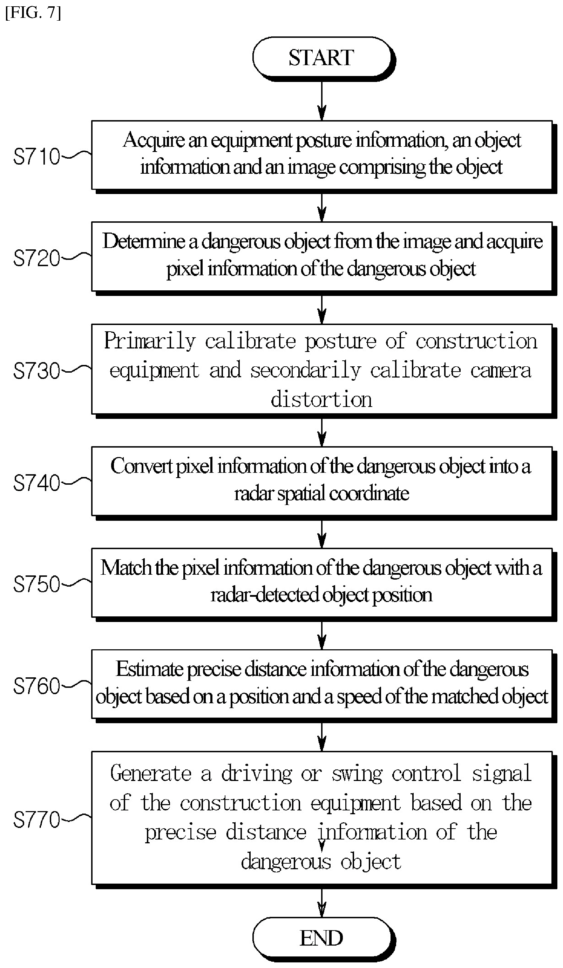

FIG. 7 is a flowchart illustrating an object detection method based on sensor fusion for construction equipment according to various embodiments of the present disclosure.

The flowchart of FIG. 7 may be performed by dedicated hardware or a dedicated processor of the object detection system 400 based on sensor fusion for construction equipment of FIG. 4, or by the processor 310 of the construction equipment of FIG. 3.

In operation S710, the construction equipment 300 or the object detection system 400 based on sensor fusion for construction equipment may acquire an image including an object, object information including a position and a speed of the object, and posture information of the construction equipment.

As described above, the camera sensor 412 may capture an image of an object surrounding the construction equipment and transmit or output the captured image to the processor. The IMU sensor 414 may detect roll/pitch/yaw values indicating a degree of tilt for each axis of the construction equipment to transmit or output the detected values to the processing device 420. The radar sensor 416 may detect the object and transmit or output position and speed information of the object surrounding the construction equipment to the processor.

According to an embodiment, the position of the object surrounding the construction equipment may be represented as radar spatial coordinates.

In operation S720, the construction equipment 300 or the object detection system 400 based on sensor fusion for construction equipment may determine a dangerous object from the image and acquire pixel information of the dangerous object on the image. The pixel information of the dangerous object may include a width, a height, and coordinates of a center point of the dangerous object on the image. In addition, the pixel information of the dangerous object may represent a feature point in the image.

In operation S730, upon receiving the posture information of the construction equipment, the construction equipment 300 or the object detection system 400 based on sensor fusion for construction equipment may primarily calibrate the pixel information of the dangerous object based on a degree of tilt of the construction equipment according to the posture information of the construction equipment. In addition, the construction equipment 300 or the object detection system 400 based on sensor fusion for construction equipment may secondarily correct distortion caused by a camera sensor included in the pixel information of the dangerous object by using a distortion coefficient such as camera lens information.

In operation S740, the construction equipment 300 or the object detection system 400 based on sensor fusion for construction equipment may convert the pixel information output as the feature point into coordinates of a radar spatial coordinate system.

In operation S750, the construction equipment 300 or the object detection system 400 based on sensor fusion for construction equipment may match the radar spatial coordinates of the dangerous object with a position of the object surrounding the construction equipment. As described above, the position of the object surrounding the construction equipment may be represented as radar spatial coordinates.

In this case, the construction equipment 300 or the object detection system 400 based on sensor fusion for construction equipment may use a probability distribution of radar for matching. The processing device 420 calculates a radar position probability distribution for positions of objects, and obtains a mean vector of the calculated position probability distribution of each object. Then, the processing device 420 may calculate a distance of the dangerous object by substituting the mean vector of the position probability distribution of each object into a formula for calculating a distance on the position probability distribution of [Equation 1].

In operation S760, the construction equipment 300 or the object detection system 400 based on sensor fusion for construction equipment may estimate precise distance information of the dangerous object based on the position and speed of the matched dangerous object. To this end, the construction equipment 300 or the object detection system 400 based on sensor fusion for construction equipment may use a Kalman filter-based filtering algorithm. In this case, the construction equipment 300 or the object detection system 400 based on sensor fusion for construction equipment may estimate more precise distance information by using a detection period of each sensor and longitudinal/lateral measurement accuracy of each sensor.

In operation S770, the construction equipment 300 or the object detection system 400 based on sensor fusion for construction equipment may generate a driving control signal or a swing control signal of the construction equipment based on the precise distance information of the dangerous object. When the construction equipment 300 or the object detection system 400 based on sensor fusion for construction equipment uses the estimated precise distance information of the dangerous object to generate equipment travel and swing control signals, it can be utilized for a more effective collision avoidance safety solution.

According to the embodiments of the present disclosure as described above, by applying AI technology and sensor fusion technology, it is possible to more accurately estimate object information surrounding the equipment for precise control to avoid collision, even when the surrounding environment is complex due to operational characteristics of construction equipment and the equipment is significantly shaken.

Even though all the components constituting the embodiments of the present disclosure have been described above as being combined into one or operating in combination, the present disclosure is not necessarily limited to these embodiments. That is, within the scope of the purpose of the present disclosure, all the components may operate by being selectively combined into at least one.

In addition, although all of the components may be implemented as one independent hardware, some or all of the components may be selectively combined to be implemented as a computer program having a program module that performs some or all of the functions combined in one or a plurality of hardware. Codes and code segments constituting the computer program may be easily inferred by those skilled in the art to which the present disclosure belongs.

Such a computer program is stored in a computer-readable storage medium and is read and executed by a processor of a computer or construction equipment, thereby implementing the embodiments of the present disclosure. Storage media for computer programs may include magnetic recording media, optical recording media, and the like.

In addition, since terms such as "comprise", "configure", or "have" described above mean that the corresponding component may be inherent unless otherwise specified, they should be interpreted as being capable of further including other components rather than excluding other components.

Unless otherwise defined, all terms including technical or scientific terms have the same meaning as commonly understood by one of ordinary skill in the art to which the present disclosure belongs. Terms commonly used, such as those defined in a dictionary, should be interpreted as having meanings consistent with the contextual meanings of the related art, and are not interpreted in an ideal or excessively formal sense unless explicitly defined in the present disclosure.

The above description is merely illustrative of the technical spirit of the present disclosure, and various modifications and variations may be made by those skilled in the art to which the present disclosure belongs without departing from the essential characteristics of the present disclosure.

Therefore, the embodiments disclosed in the present disclosure are not intended to limit the technical spirit of the present disclosure but to describe it, and the scope of the technical spirit of the present disclosure is not limited by these embodiments. The scope of protection of the present disclosure should be interpreted by the following claims, and all technical spirits within the scope equivalent thereto should be interpreted as being included in the scope of rights of the present disclosure.

## Claims

1. A sensor fusion-based object detection system comprising:
a sensor device comprising a first sensor configured to output an image, a second sensor configured to output a position and a speed of at least one object, and a third sensor configured to output posture information of construction equipment; and
a processing device configured to generate a driving control signal or a swing control signal of the construction equipment,
wherein the processing device comprises:
an object determination module configured to determine a dangerous object from the image and output pixel information of the dangerous object;
a coordinate conversion module configured to convert the pixel information of the dangerous object into a position on a radar spatial coordinate system;
a matching module configured to receive the position of the dangerous object on the radar spatial coordinate system, receive a position of the at least one object on the radar spatial coordinate system from the second sensor, and match the dangerous object with the at least one object;
a filtering module configured to estimate precise distance information of the dangerous object based on a position and a speed of an object matched with the dangerous object among the at least one object; and
a control signal generation module configured to generate the driving control signal or the swing control signal of the construction equipment based on the precise distance information of the dangerous object.

2. The sensor fusion-based object detection system of claim 1, wherein the first sensor comprises a camera sensor, the second sensor comprises a radar sensor, and the third sensor comprises an Inertial Measurement Unit (IMU) sensor.

3. The sensor fusion-based object detection system of claim 1, wherein the posture information comprises a roll value, a pitch value, and a yaw value representing a degree of tilt for each axis.

4. The sensor fusion-based object detection system of claim 1, wherein the object determination module comprises a deep learning-based model learned to identify a specific object comprising a pedestrian, with which the construction equipment must not collide, as the dangerous object, and
the pixel information of the dangerous object comprises a width, a height, and coordinates of a center point of the dangerous object on the image.

5. The sensor fusion-based object detection system of claim 2, wherein the coordinate conversion module primarily calibrates the pixel information of the dangerous object based on the posture information of the construction equipment, and secondarily calibrates distortion of a camera sensor included in the pixel information of the dangerous object based on lens information of the camera sensor.

6. The sensor fusion-based object detection system of claim 2, wherein the matching module matches the dangerous object with the at least one object by using an object position output from the radar sensor and a probability distribution of the object position.

7. The sensor fusion-based object detection system of claim 6, wherein the matching module calculates a distance between the dangerous object and each of the at least one object by using an equation: ${d}_{m} = \sqrt{{\left({x}_{camera , i}-{μ}_{radar , j}\right)}^{T} {{\sum }_{j}^{- 1} \left({x}_{camera , i}-{μ}_{radar , j}\right)}^{T}}$ (wherein *x_{camera,i}* is a position vector of a dangerous object i, µ*_{radar,j}* is a position probability distribution mean vector of an object j output from the radar sensor, and ${Σ}_{j}^{- 1}$ is an inverse covariance matrix of an object position output from the radar sensor), and matches the dangerous object with an object having a shortest distance among the at least one object.

8. The sensor fusion-based object detection system of claim 1, wherein the filtering module is implemented by using a Kalman filter-based filtering algorithm.

9. Construction equipment comprising:
a sensor device comprising a camera sensor configured to output an image, a radar sensor configured to output a position and a speed of at least one object, and an IMU sensor configured to output posture information of the construction equipment; and
a processor configured to generate a driving control signal or a swing control signal of the construction equipment,
wherein the processor is configured to:
determine a dangerous object from the image and acquire pixel information of the determined dangerous object;
convert the pixel information of the dangerous object into a position on a radar spatial coordinate system;
receive a position of the at least one object on the radar spatial coordinate system from the radar sensor;
match the dangerous object with the at least one object;
estimate precise distance information of the dangerous object based on a position and a speed of an object matched with the dangerous object among the at least one object; and
generate the driving control signal or the swing control signal of the construction equipment based on the precise distance information of the dangerous object.

10. The construction equipment of claim 9, wherein the posture information comprises a roll value, a pitch value, and a yaw value representing a degree of tilt for each axis.

11. The construction equipment of claim 9, wherein the processor comprises a deep learning-based model learned to identify a specific object comprising a pedestrian, with which the construction equipment must not collide, as the dangerous object, and
the pixel information of the dangerous object comprises a width, a height, and coordinates of a center point of the dangerous object on the image.

12. The construction equipment of claim 9, wherein the processor is configured to:
primarily calibrate the pixel information of the dangerous object based on the posture information of the construction equipment; and
secondarily calibrate distortion of a camera sensor included in the pixel information of the dangerous object based on lens information of the camera sensor.

13. The construction equipment of claim 9, wherein the processor is configured to match the dangerous object with the at least one object by using an object position output from the radar sensor and a probability distribution of the object position.

14. The construction equipment of claim 13, wherein the processor is configured to calculate a distance between the dangerous object and each of the at least one object by using an equation: ${d}_{m} = \sqrt{{\left({x}_{camera , i}-{μ}_{radar , j}\right)}^{T} {{\sum }_{j}^{- 1} \left({x}_{camera , i}-{μ}_{radar , j}\right)}^{T}}$ (wherein *x_{camera,i}* is a position vector of a dangerous object i, µ*_{radar,j}* is a position probability distribution mean vector of an object j output from the radar sensor, and ${Σ}_{j}^{- 1}$ is an inverse covariance matrix of an object position output from the radar sensor), and match the dangerous object with an object having a shortest distance among the at least one object.

15. The construction equipment of claim 9, wherein the processor is configured to estimate the precise distance information of the dangerous object by using a Kalman filter-based filtering algorithm.

16. A sensor fusion-based object detection method by construction equipment, the method comprising:
acquiring an image comprising an object by using a camera sensor;
acquiring a position and a speed of at least one object by using a radar sensor;
acquiring posture information of the construction equipment by using an IMU sensor;
determining a dangerous object from the image and acquiring pixel information of the determined dangerous object;
converting the pixel information of the dangerous object into a position on a radar spatial coordinate system;
matching the dangerous object with the at least one object;
estimating precise distance information of the dangerous object based on a position and a speed of an object matched with the dangerous object among the at least one object; and
generating a driving control signal or a swing control signal of the construction equipment based on the precise distance information of the dangerous object.

17. The sensor fusion-based object detection method of claim 16, wherein the posture information comprises a roll value, a pitch value, and a yaw value representing a degree of tilt for each axis.

18. The sensor fusion-based object detection method of claim 16, wherein the determining of the dangerous object comprises determining the dangerous object by using a deep learning-based model learned to identify a specific object comprising a pedestrian, with which the construction equipment must not collide, as the dangerous object, and the pixel information of the dangerous object comprises a width, a height, and coordinates of a center point of the dangerous object on the image.

19. The sensor fusion-based object detection method of claim 16, further comprising:
primarily calibrating the pixel information of the dangerous object based on the posture information of the construction equipment; and
secondarily calibrating distortion caused by a camera sensor included in the pixel information of the dangerous object based on lens information of the camera sensor.

20. The sensor fusion-based object detection method of claim 16, wherein the matching of the dangerous object with the at least one object comprises matching the dangerous object with the at least one object by using an object position output from the radar sensor and a probability distribution of the object position.

21. The sensor fusion-based object detection method of claim 20, wherein the matching of the dangerous object with the at least one object by using the object position output from the radar sensor and the probability distribution of the object position comprises:
calculating a distance between the dangerous object and each of the at least one object by using an equation: ${d}_{m} = \sqrt{{\left({x}_{camera , i}-{μ}_{radar , j}\right)}^{T} {{\sum }_{j}^{- 1} \left({x}_{camera , i}-{μ}_{radar , j}\right)}^{T}}$
(wherein *x_{camera,i}* is a position vector of a dangerous object i, µ*_{radar,j}* is a position probability distribution mean vector of an object j output from the radar sensor, and ${Σ}_{j}^{- 1}$ is an inverse covariance matrix of an object position output from the radar sensor); and
matching the dangerous object with an object having a shortest distance among the at least one object.

22. The sensor fusion-based object detection method of claim 16, wherein the estimating of the precise distance information of the dangerous object comprises estimating the precise distance information of the dangerous object by using a Kalman filter-based filtering algorithm.
